# EUROPÄISCHE PATENTSCHRIFT

(11) **EP 2 292 814 B1**
(45) Veröffentlichungstag und Bekanntmachung des Hinweises auf die Patenterteilung: **30.01.2013**
(21) Anmeldenummer: 10191882.9
(22) Anmeldetag: 03.09.2008
(51) Int. Cl.: D01D 1/06, B01F 15/04, F04B 23/02

(54) **Vorrichtung zum Dosieren und Einspeisen flüssiger Stoffe**
Device for metering and feeding liquid substances
Dispositif de dosage et d'alimentation de matières liquides

(30) Priorität: 13.09.2007 DE 102007043711
(43) Veröffentlichungstag der Anmeldung: 09.03.2011
(62) Teilanmeldung aus: 08803612.4
(73) Patentinhaber: Oerlikon Textile GmbH & Co. KG, 42897 Remscheid (DE)
(72) Erfinder: Helbing, Ulrich, 51399, Burscheid (DE); Meier, Klaus Stefan, 22305, Hamburg (DE)
(74) Vertreter: Kahlhöfer, Hermann

(56) Entgegenhaltungen:
- EP-A- 0 794 222
- WO-A-2004/013386
- WO-A-2005/056889
- US-B1- 6 572 803

## Beschreibung

Die Erfindung betrifft eine Vorrichtung zum Dosieren und Einspeisen flüssiger Stoffe, insbesondere flüssiger Farben für Kunststoffschmelzen gemäß dem Oberbegriff des Anspruchs 1.

Eine gattungsgemäße Vorrichtung zum Dosieren und Einspeisen flüssiger Stoffe ist beispielsweise aus der EP 0 794 222 B1 bekannt.

Um beim Schmelzspinnen synthetischer Fäden eine Einfärbung der Kunststoffschmelze zu erhalten, werden bei der bekannten Vorrichtung mehrere flüssige Farben in mehreren separaten Tanks gespeichert. Jedem Tank ist eine erste Primärpumpe zugeordnet, um die in dem Tank gespeicherte flüssige Farbe dosiert aus dem Tank entnehmen zu können. Der Primärpumpe ist eine zweite Sekundärpumpe nachgeordnet, die über eine Einspeiseleitung mit einem schmelzeführenden Bauteil einer Spinneinrichtung verbunden ist. Durch die Sekundärpumpe wird die durch die Primärpumpe geförderte flüssige Farbe abgegeben. Die an der Sekundärpumpe angeschlossene Einspeiseleitung mündet hierbei unmittelbar in ein schmelzeführendes Bauteil der Spinneinrichtung.

Bei der bekannten Vorrichtung werden die flüssigen Farben getrennt voneinander gefördert und in ein Abnehmersystem eingespeist. Insbesondere bei Systemen, bei welchem eine Mehrzahl von flüssigen Stoffen in unterschiedlicher Zusammensetzung vorgehalten werden müssen, ergeben sich somit sehr komplexe und apparativ aufwändige Vorrichtungen zum Dosieren und Einspeisen der Stoffe. Zudem lassen sich Stoffgemische, die durch Zusammenführen mehrerer einzelner Stoffe gebildet werden, erst im Abnehmersystem und somit beispielsweise erst innerhalb der Kunststoffschmelze miteinander vermengen.

Zum Dosieren und Einspeisen von Additiven in Kunststoffschmelzen ist aus der DE 42 14 081 A1 ein System bekannt, bei welchem mehrere Vorratsbehälter gemeinsam über eine Förderleitung an einer Einspeiseeinrichtung angeschlossen sind. Die Einspeiseeinrichtung wirkt mit einer Saugpumpe zusammen, so dass in der Förderleitung ein Unterdruck entsteht. Den Vorratsbehältern ist ein Umschaltventil zugeordnet, so dass die Vorratsbehälter wahlweise der Förderleitung zugeschaltet werden.

Bei der bekannten Vorrichtung werden unterschiedliche farbige Granulate in den Vorratsbehältern vorgehalten, die über die Einspeiseeinrichtung unmittelbar einem Extruder aufgegeben werden. Ein derartiges System ist jedoch völlig ungeeignet, um flüssige Stoffe dosiert einspeisen zu können.

Aus der US 6,572,803 B1 ist eine Vorrichtung zum Dosieren und Einspeisen flüssiger Farben bekannt, bei welcher die flüssigen Farben in mehreren Tanks vorgehalten werden und bei welchem jedem Tank eine Pumpeneinheit zugeordnet ist, welche die betreffende flüssige Farbe über eine Einspeiseleitung einem Spinndüsenpaket zuführt. Auch hierbei wird mit zunehmender Zahl der verschiednen Farben die Vorrichtung in ihrem Aufbau sehr komplex und aufwändig. Zudem lassen sich Farbkombinationen nur unmittelbar innerhalb des Spinndüsenpaketes bilden.

Es ist nun Aufgabe der Erfindung, eine Vorrichtung der eingangs genannten Art zum Dosieren und Einspeisen flüssiger Stoffe zu schaffen, die eine große Anzahl von vorgehaltenen Stoffen mit einfachen Mitteln flexibel dosiert und den betreffenden Stoff mit oder ohne Überdruck einem Abnehmersystem zuführt.

Ein weiteres Ziel der Erfindung liegt darin, die gattungsgemäße Vorrichtung derart weiterzubilden, dass bei einer Vielzahl von Stoffen die Möglichkeit zur Dosierung und Einspeisung von Stoffgemischen gegeben ist.

Die der Erfindung zugrunde liegende Aufgabe wird durch eine Vorrichtung mit den Merkmalen nach Anspruch 1 gelöst.

Vorteilhafte Weiterbildungen der Erfindung sind in den Merkmalen und Merkmalskombinationen der abhängigen Ansprüche definiert.

Der besondere Vorteil der Erfindung liegt darin, dass die Trennung der Funktionen Dosieren und Einspeisen durch die Primär- und Sekundärpumpe erhalten bleiben, um jede der einzelnen flüssigen Stoffe mit höchster Dosiergenauigkeit einem Abnehmersystem mit oder ohne Überdruck zuführen zu können. Je nach Druckniveau des Abnehmersystems können sowohl die Primärpumpe als auch die Sekundärpumpe wahlweise beide Funktionen ausführen. Vorzugsweise wird die Entnahme des jeweiligen flüssigen Stoffes aus dem Tank durch die Primärpumpe dosiert ausgeführt. Um jede der in den Tanks vorgehaltenen flüssigen Stoffe separat einem Abnehmersystem zuführen zu können, wird gemäß einer ersten, nicht erfindungsgemäßen Lösung der zugrunde liegenden Aufgabe der Primärpumpe auf der Einlassseite ein Wechselventil zugeordnet, das zur Anbindung mehrerer Tanks mehrere Anschlüsse aufweist. Dabei ist das Wechselventil derart steuerbar, dass die Primärpumpe wahlweise mit einem der angeschlossenen Tanks verbunden werden kann. Dadurch lässt sich vorteilhaft die Primärpumpe abwechselnd mit einem der Tanks verbinden, um den im Tank enthaltenen Stoff dosiert abzugeben. Anschließend wird der durch die Primärpumpe geförderte flüssige Stoff zur Einspeisung durch die Sekundärpumpe in eine Einspeiseleitung gefördert.

Um bei einer größeren Anzahl von vorgehaltenen flüssige Stoffen eine Mehrzahl von Tanks zu integrieren, hat sich insbesondere eine Weiterbildung dieser Lösung bewährt, bei welcher mehrere Primärpumpen und mehrere den Primärpumpen zugeordnete Wechselventile vorgesehen sind, wobei die den Primärpumpen zugeordneten Wechselventile jeweils über mehrere Anschlüsse zur Anbindung mehrerer Tanks verfügen und wobei die Wechselventile separat ansteuerbar sind.

Bei einer Vielzahl von Anschlüssen an den Wechselventile lässt sich die Freischaltung einzelner Anschlüsse vorteilhaft dadurch begünstigen, dass jedem Wechselventil ein Vorsteuerventil vorgeschaltet ist. Das Vorsteuerventil ist mit einer Steuereinrichtung verbunden und wandelt die an der Steuereinrichtung aufgegebenen Steuerbefehle um und bewirkt eine Umschaltung des Wechselventils. Dadurch lassen sich größere Schaltkräfte erzeugen. So können zur Vorsteuerung des Wechselventils beispielsweise Pneumatiksysteme verwendet werden.

Grundsätzlich ist es jedoch auch möglich, das Wechselventil mit jeweils einzeln ansteuerbare Teilventilen auszubilden, um die Anschlüsse an dem Wechselventil abwechselnd bei Bedarf mit der Primärpumpe zu verbinden. Derartige Teilventile würden dann bevorzugt ohne eine Vorsteuerung direkt von der Steuereinrichtung aktiviert.

Um jede der nebeneinander angeordneten Primärpumpen individuell betreiben zu können, kann jeder Primärpumpe ein Elektromotor und ein Steuergerät zugeordnet werden. Die Steuergeräte sind mit der Steuereinrichtung verbunden. Damit lassen sich auch vorteilhaft die Steuerung der Wechselventile und die Steuerung der Primärpumpen aufeinander abstimmen. Die Drehzahlsteuerung der Primärpumpe ermöglicht außerdem eine Einstellung der Fördermenge, die die Primärpumpe über das Wechselventil dem jeweiligen Tank entnimmt.

Besonders vorteilhaft ist es, die Primärpumpen als Zahnradpumpen mit unterschiedlichen Förderleistungen auszubilden. So können die in den einzelnen Tanks vorgehaltenen flüssigen Stoffe je nach gewünschter Menge jeweils mit einer Primärpumpe mit angepasster Förderleistung gefördert werden. Bei einer Abgabe von einer geringen dosierten Menge lässt sich die Primärpumpe mit der kleinsten Förderleistung mit dem jeweiligen Tank verbinden. Für den Fall, dass der gleiche flüssige Stoff mit großer Menge benötigt wird, kann entsprechend eine benachbarte Primärpumpe mit größerer Förderleistung aktiviert werden.

Eine Ausführung, bei welcher die Primärpumpen über ein Verteilersystem gemeinsam mit der Sekundärpumpe verbunden sind und bei welcher der Sekundärpumpe auf der Auslassseite eine Mischeinrichtung zugeordnet ist, die mit der Einspeiseleitung verbunden ist, wird bevorzugt verwendet, um neben den Funktionen Fördern und Dosieren noch die Funktion Mischen ausführen zu können. Damit lassen sich vorteilhaft auch Stoffgemische einem Abnehmersystem zuführen. Durch Freigabe mehrerer Tanks und mehrerer Primärpumpen können über das Verteilsystem mehrere Stoffe gleichzeitig geführt und anschließend vermischt werden.

Das Verteilersystem wird dabei vorzugsweise durch mehrere Dosierleitungen und zumindest einem Verteilblock gebildet, wobei die Primärpumpen durch die Dosierleitungen parallel mit dem Verteilerblock verbunden sind und wobei der Verteilerblock durch eine Sammelleitung mit der Sekundärpumpe gekoppelt ist.

Für den Fall, dass mehrere Primärpumpen gleichzeitig flüssige Stoffe in das Verteilersystem fördern muss sichergestellt sein, dass die durch die Sekundärpumpe geförderte Menge des Stoffgemisches in Relation zu den Förderleistungen der Primärpumpen steht. Hierzu ist es besonders vorteilhaft, wenn ein erster Drucksensor in der Sammelleitung angeordnet ist, der mit der Steuereinrichtung verbunden ist, wobei die Sekundärpumpe durch einen Elektromotor angetrieben ist, der mittels einem Steuergerät über die Steuereinrichtung steuerbar ist. Somit lässt sich bei unzulässiger Druckzunahme oder Druckabnahme im Verteilersystem die Förderleistung der Sekundärpumpe durch Drehzahlerhöhung oder Drehzahlabsenkung entsprechend anpassen.

Der sich auf der Auslassseite der Sekundärpumpe insbesondere vor der Mischeinrichtung einstellende Druck wird bevorzugt durch einen zweiten Drucksensor in der Einspeiseleitung erfasst und der Steuereinrichtung aufgegeben. Damit können zudem vorteilhaft Druckdifferenzen an der Sekundärpumpe eingestellt oder Drucküberhöhungen in der Einspeiseleitung vermieden werden.

Um bei einem Stoffwechsel beispielsweise bei einem Wechsel der Farben möglichst keine ungewünschten Farbvermischungen zu erhalten, ist die Weiterbildung der Erfindung besonders vorteilhaft, bei welcher ein Spülventil in der Einspeiseleitung angeordnet ist, durch welches die Einspeiseleitung mit einem Ablauf verbunden werden kann, so dass bei einem Farbwechsel die neue Farbe während der Dauer einer Spülphase über das Spülventil abgeführt werden kann.

Die Spülung lässt sich noch dadurch verbessern, dass ein Spülmittel in einem der Tanks vorgehalten wird. So lässt sich jedes Wechselventil sowie jede Primärpumpe bei einem Stoffwechsel mit dem Spülmittel durchspülen.

Um die Entnahme des flüssigen Stoffes aus einem der Tanks zu verbessern, wird auch vorgeschlagen, die Tanks mit einer Druckquelle zu verbinden, durch welche ein auf den Stoff einwirkendes Gaspolster erzeugbar ist. Als Gas sind hierbei Luft oder Stickstoff besonders geeignet.

Die hier beanspruchte Lösung der erfindungsgemäßen Aufgabe ist aber durch eine Vorrichtung gemäß den Merkmalen nach Anspruch 1 gegeben. Demnach sind den Tanks unmittelbar mehrere Primärpumpen zugeordnet, wobei den Primärpumpen auf der Auslassseite ein Verteilersystem zugeordnet ist, durch welche die Primärpumpen mit der Sekundärpumpe verbunden sind. In diesem Fall ist jedem Tank eine separate Primärpumpe zugeordnet, die wahlweise separat steuerbar ist. Zur Einspeisung sind die Primärpumpen gemeinsam an einer Sekundärpumpe angeschlossen, so dass eine sehr gleichmäßige Förderung und Einspeisung der Stoffe in ein Abnehmersystem gewährleistet ist.

Auch hierbei wird das Verteilersystem erfindungsgemäß bevorzugt durch mehrere Dosierleitungen und einen Verteilerblock gebildet, so dass die Primärpumpen über die Dosierleitungen parallel mit dem Verteilerblock verbunden werden können. Der Anschluss des Verteilerblockes an die Sekundärpumpe erfolgt vorzugsweise über eine Sammelleitung.

Um insbesondere Stoffgemische einem Abnehmersystem zuführen zu können, ist erfindungsgemäß bevorzugt der Sekundärpumpe auf der Auslassseite eine Mischeinrichtung zugeordnet, die mit der Einspeiseleitung verbunden ist. Die Mischeinrichtung kann hierbei sowohl durch einen statischen Mischer oder auch einen dynamischen Mischer mit separatem Antrieb gebildet sein.

Die Erfindung und ihr Umfeld werden nachfolgend anhand einiger Ausführungsbeispiele unter Hinweise auf die beigefügten Zeichnungen näher erläutert.

Es stellen dar:
- Fig. 1: schematisch den Aufbau eines ersten nicht zur Erfindung gehörigen Ausführungsbeispiels
- Fig. 2: schematisch den Aufbau eines Ausführungsbeispiels der erfindungsgemäßen Vorrichtung und
- Fig. 3: schematisch den Aufbau eines weiteren Ausführungsbeispiels der erfindungsgemäßen Vorrichtung

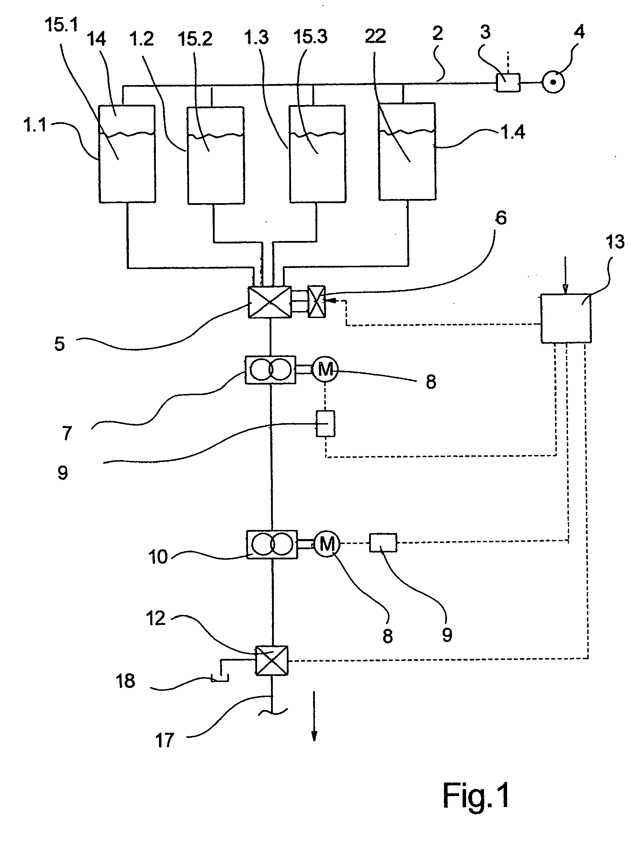

In Fig. 1 ist der Aufbau eines des ersten, nicht zur Erfindung gehörigen Ausführungsbeispiels einer Dosiervorrichtung schematisch gezeigt.

Die Vorrichtung weist mehrere Tanks in einer parallelen Anordnung nebeneinander auf. In Fig. 1 sind insgesamt vier Tanks 1.1, 1.2, 1.3 und 1.4 gezeigt. Die Tanks 1.1, 1.2 und 1.3 enthalten jeweils einen flüssigen Stoff, beispielsweise eine flüssige Farbe in unterschiedlicher Ausführung. So ist der flüssige Stoff im Tank 1.1 mit dem Bezugszeichen 15.1, im Tank 1.2 mit dem Bezugszeichen 15.2 und im Tank 1.3 mit dem Bezugszeichen 15.3 gekennzeichnet. Der Tank 1.4 enthält ein Spülmittel 22, das je nach Bedarf zum Durchspülen der Vorrichtung genutzt wird. Die Tanks 1.1 bis 1.4 sind druckdicht ausgebildet und auf ihrer Auslassseite jeweils über separate Tankleitungen mit einem Wechselventil 5 verbunden. Das Wechselventil 5 weist hierzu insgesamt vier Anschlüsse auf, um jeden der Tanks 1.1 bis 1.4 anschließen zu können. Den Tanks 1.1 bis 1.4 ist auf der gegenüberliegenden Seite eine Druckquelle 4 zugeordnet, die über Druckluftleitungen 2 und einem Druckregeventil 3 mit den Tanks 1.1 bis 1.4 verbunden ist. Durch die Druckquelle 4 wird ein Druckmedium vorzugsweise Luft oder Stickstoff in einem freien Raum oberhalb der flüssigen Stoffe innerhalb der Tanks eingelassen, so dass sich in jedem Tank ein Gaspolster 14 ausbildet. In Fig. 1 ist das Gaspolster in dem Tank 1.1 oberhalb des Stoffes 15.1 beispielhaft mit dem Bezugszeichen 14 gekennzeichnet.

Das Wechselventil 5 ist über ein Vorsteuerventil 6 derart steuerbar, dass einer der vier Anschlüsse mit einer nachgeordneten Primärpumpe 7 verbunden ist. So lässt sich die Primärpumpe 7 über das Wechselventil 5 wahlweise mit einem der Tanks 1.1 bis 1.4 verbinden. Die Primärpumpe 7 wird über einen Elektromotor 8 angetrieben, der über ein Steuergerät 9 steuerbar ist. Das Steuergerät 9 ist mit einer Steuereinrichtung 13 verbunden, die ebenfalls über eine Steuerleitung mit dem Vorsteuerventil 6 des Wechselventils 5 gekoppelt ist.

Zur Einspeisung des durch die Primärpumpe 7 wahlweise aus den Tanks 1.1, 1.2 und 1.3 geförderten Stoffes 15.1, 15.2 oder 15.3 ist der Primärpumpe 7 unmittelbar eine Sekundärpumpe 10 nachgeordnet. Die Sekundärpumpe 10 wird ebenfalls über einen Elektromotor 8 angetrieben, der über die Steuereinrichtung 13 und dem Steuergerät 9 steuerbar ist. Die Sekundärpumpe 10 fördert den Stoff unmittelbar in einer Einspeiseleitung 17, die in ein hier nicht dargestelltes Abnehmersystem mündet.

Das in Fig. 1 dargestellte Ausführungsbeispiel lässt sich beispielsweise vorteilhaft zum Einspeisen flüssiger Farben in ein Schmelzspinnprozess nutzen. In diesem Fall würde die Einspeiseleitung 17 unmittelbar in ein schmelzeführendes Bauteil, beispielsweise eine Schmelzeleitung, einem Mischer oder einen Spinnkopf münden. Grundsätzlich ist das Ausführungsbeispiel geeignet, um beliebige flüssige Stoffe einem Abnehmersystem dosiert zuzuführen.

Um bei einem Stoffwechsel eine ungewünschte Vermischung der Stoffe zu vermeiden, ist in dem Tank 1.4 ein Spülmittel 22 enthalten. Das Spülmittel 22 kann durch Steuerung des Wechselventils 5 unmittelbar über die Primärpumpe 7 gefördert und der Sekundärpumpe 10 zugeführt werden. Damit lassen sich das Wechselventil 5, die Primärpumpe 7 und die Sekundärpumpe 10 vorteilhaft durchspülen. Damit das Spülmittel nicht unmittelbar in ein Abnehmersystem gelangt, ist in der Einspeiseleitung 17 ein Spülventil 12 angeordnet, dass mit einem Ablauf 18 verbunden ist. Durch Aktivierung des Spülventils 12 über die Steuereinrichtung 13 kann somit das Spülmittel aus der Einspeiseleitung 17 zu einem Ablauf 18 abgeführt werden.

Das Spülventil 12 kann auch vorteilhaft gemeinsam mit einem der Tanks 1.1 bis 1.3 genutzt werden, um nach einem Wechsel von einem Tank auf einen anderen Tank zwecks Änderung des Stoffes zunächst den neuen Stoff während einer Spülphase aus dem System abzuleiten. In den Systemen, bei welchen die Spülung durch die Stoffe selbst erfolgt, könnte der Tank 1.4 dazu genutzt werden, noch einen weiteren Stoff, z. B. eine weitere Farbe vorhalten zu können.

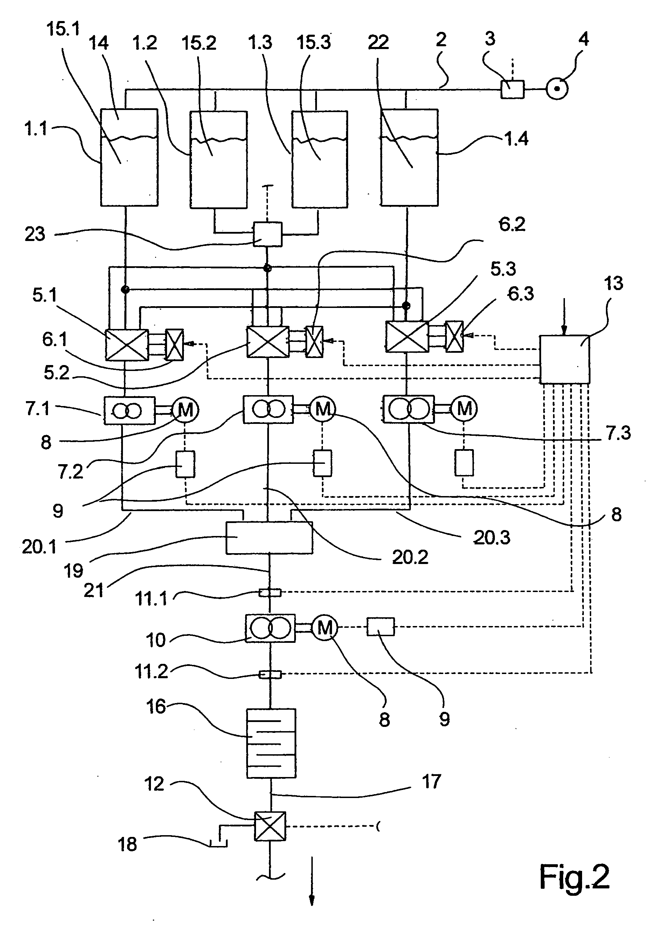

In Fig. 2 ist ein Ausführungsbeispiel der erfindungsgemäßen Vorrichtung schematisch gezeigt. Hierbei sind die Bauteile gleicher Funktion mit identischen Bezugszeichen versehen.

Bei dem in Fig. 2 dargestellten Ausführungsbeispiel ist die gleiche Anordnung der Tanks zum Vorhalten mehrerer flüssiger Stoffe gezeigt. An dieser Stelle sei jedoch ausdrücklich erwähnt, dass die Anzahl der Tanks sowohl in dem Ausführungsbeispiel nach Fig. 1 als auch in dem Ausführungsbeispiel nach Fig. 2 beispielhaft sind. So lässt sich auch eine größere Anzahl von Tanks in der erfindungsgemäßen Vorrichtung integrieren.

Den Tanks 1.1 bis 1.4 sind mehrere Wechselventile und mehrere Sekundär-pumpen zugeordnet. Bei dem in Fig. 2 dargestellten Ausführungsbeispiel sind insgesamt drei Wechselventile 5.1, 5.2 und 5.3 vorgesehen. Jedes der Wechsel-ventile 5.1, 5.2 und 5.3 weisen mehrere Anschlüsse auf, um mit jedem der Tanks 1.1, 1.2, 1.3 und 1.4 in Verbindung zu stehen. Den mittleren Tanks 1.2 und 1.3 ist dabei jeweils nur ein Anschluss der Wechselventil 5.1, 5.2 und 5.3 zugeordnet, da die Tanks 1.2 und 1.3 wahlweise über ein Umschaltventil 23 dem System zugeschaltet werden können. Das Umschaltventil 23 wird hierzu über die Steuereinrichtung 13 gesteuert. Die Stoffe 15.2 und 15.3 in den Tanks 1.2 und 1.3 könnten beispielsweise identisch ausgebildet sein, um so eine größere Menge eines Stoffes vorhalten zu können. Im Tank 1.1 ist ein weiterer Stoff 15.1 vorgehalten. Dagegen dient der Tank 1.4 zur Speicherung eines Spülmittels 22.

Insoweit lässt sich über das Wechselventil 5.1 die Primärpumpe 7.1 mit jedem der Tanks 1.1 bis 1.4 verbinden. Ebenso kann die Primärpumpe 7.2 über das Wechselventil 5.2 mit jedem der Tanks 1.1 bis 1.4 verbunden werden. Dementsprechend ist auch die Primärpumpe 7.3 über das Wechselventil 5.3 den Tanks 1.1 bis 1.4 wahlweise koppelbar.

Den Wechselventilen 5.1, 5.2 und 5.3 sind jeweils Vorsteuerventile 6.1, 6.2 und 6.3 zugeordnet, die über Steuerleitungen mit der Steuereinrichtung 13 gekoppelt sind. Die Funktion und der Aufbau der Wechselventile und der Vorsteuerventile sind identisch zu dem Ausführungsbeispiel nach Fig. 1, so dass an dieser Stelle keine weiteren Erläuterungen erfolgen.

Die Primärpumpe 7.1, 7.2 und 7.3 sind jeweils als Zahnradpumpen ausgebildet und weisen unterschiedliche Förderleistungen auf. Die Förderleistung bezeichnet hierbei die Fördermenge pro Umdrehung. Diese wird im Wesentlichen durch den Zahnradsatz und die Zahngeometrie der Zahnradpumpen bestimmt. So weist die Primärpumpe 7.1 eine kleine Förderleistung beispielsweise 0,05 ccm/U auf. Die Primärpumpe 7.2 ist mit einer größeren Förderleistung ausgestattet, die beispielsweise bei 3 ccm/U liegen könnte. Die Primärpumpe 7.3 könnte ein noch größeres Fördervolumen aufweisen, das beispielsweise bei 6 ccm/U liegen könnte. Jede der Primärpumpen 7.1 bis 7.3 wird durch einen separaten Elektromotor 8 angetrieben, welcher über die Steuereinrichtung 13 und jeweils einen dem Elektromotor 8 zugeordneten Steuergerät 9 gesteuert wird. Die Steuergeräte 9 könnten sowohl den Elektromotoren 8 - wie in Fig. 2 dargestellt - als auch alternativ der Steuereinrichtung 13 zugeordnet sein, die vorzugsweise in einem Schaltschrank angeordnet ist.

Die Primärpumpen 7.1, 7.2 und 7.3 sind über ein Verteilersystem mit einer Sekundärpumpe 10 verbunden. Das Verteilersystem wird in diesem Ausführungsbeispiel durch die Dosierleitungen 20.1, 20.2 und 20.3 gebildet, die die Primärpumpen 7.1, 7.2 und 7.3 mit einem Verteilerblock 19 verbinden. Der Verteilerblock 19 ist über eine Sammelleitung 21 mit der Sekundärpumpe 10 verbunden. Die Sekundärpumpe 10 wird über den Elektromotor 8 angetrieben, der über die Steuereinrichtung 13 und dem Steuergerät 9 gesteuert ist.

Zur Drucküberwachung ist auf der Einlassseite der Sekundärpumpe 10 in der Sammelleitung 21 ein Drucksensor 11.1 vorgesehen, der unmittelbar mit der Steuereinrichtung 13 gekoppelt ist. Auf der Auslassseite der Sekundärpumpe ist zwischen der Sekundärpumpe 10 und einer Mischeinrichtung 16 in der Einspeiseleitung 17 ein zweiter Drucksensor 11.2 vorgesehen, der ebenfalls mit der Steuereinrichtung 13 gekoppelt ist.

Die auf der Auslassseite der Sekundärpumpe 10 in der Einspeiseleitung 17 angeordnete Mischeinrichtung 16 ist in diesem Ausführungsbeispiel als statischer Mischer ausgebildet. Grundsätzlich besteht jedoch auch die Möglichkeit, dass die Mischeinrichtung 16 durch einen dynamischen Mischer gebildet ist. Grundsätzlich können hierbei auch Kombinationsaggregate von Pumpen und Mischern eingesetzt werden, um die Funktionen wie Dosieren, Fördern und Mischen zu verbinden.

Auf der Auslassseite der Mischeinrichtung 16 ist das Spülventil 12 angeordnet, welches die Einspeiseleitung 17 wahlweise mit einem Ablauf 18 verbindet. Das Spülventil 12 ist hierzu ebenfalls über die Steuereinrichtung 13 ansteuerbar und könnte wahlweise mit dem Tank 1.4 oder einem der anderen Tanks 1.1 bis 1.3 zusammenwirken.

Das in Fig. 2 dargestellte Ausführungsbeispiel der erfindungsgemäßen Vorrichtung ist besonders geeignet, um mit hoher Flexibilität eine Mehrzahl von flüssigen Stoffen beispielsweise flüssige Farben und Stoffgemische zwischen einem Abnehmersystem zuzuführen. Hierbei ist die Verwendung der Primärpumpen 7.1 bis 7.3 mit unterschiedlichen Förderleistungen besonders vorteilhaft, um exakte Dosierungen oder Mischungsverhältnisse zwischen den flüssigen Stoffen herzustellen. So könnte beispielsweise eine Hauptkomponente aus dem Tank 1.3 über das Umschaltventil 23, dem Wechselventil 5.3 und der Primärpumpe 7.3 gefördert werden. Eine zweite Stoffkomponente könnte zur Bildung eines Mischungsverhältnisses beispielsweise aus dem Tank 1.1 über das Wechselventil 5.1 durch die Primärpumpe 7.1 mit kleiner Förderleistung gefördert werden. Die dosierten Mengen der Primärpumpen 7.1 und 7.3 werden nun über das Verteilersystem der Sekundärpumpe 10 zugeführt. Die Sekundärpumpe 10 fördert beide Stoffkomponenten in die Mischeinrichtung 16, in welcher die Vermischung der Stoffe 15.1 und 15.3 stattfindet. Anschließend wird das Stoffgemisch über die Einspeiseleitung 17 einem angeschlossenem Abnehmersystem zugeführt. Das Abnehmersystem könnte beispielsweise ein Extrusionssystem zum Ausschmelzen einer Kunststoffschmelze sein. So könnten vorteilhaft flüssige Additive einer Kunststoffschmelze zugeführt werden.

Um eine unzulässige Druckerhöhung in dem Verteilersystem zu vermeiden, wird in der Sammelleitung 21 über den Drucksensor 11.1 der Überdruck erfasst und in der Steuereinrichtung 13 überwacht. Sobald ein zulässiger oberer Wert des Überdruckes überschritten wird, erfolgt eine entsprechende Ansteuerung des Steuergerätes 19, so dass der Elektromotor 8 der Sekundärpumpe 10 mit höherer Drehzahl angetrieben wird. Damit erhöht sich die Fördermenge der Sekundärpumpe 10, so dass der Druck in dem Verteilersystem absinkt. Für den Fall, dass der Einspeiseleitung 17 vor der Mischeinrichtung 16 eine unzulässige Druckerhöhung auftritt, wird diese durch den Drucksensor 11.2 erfasst und innerhalb der Steuereinrichtung 13 überwacht. Bei unzulässiger Drucküberschreitung könnte dementsprechend eine Abschaltung des Systems erfolgen.

Im Fall eines Stoffwechsels ist bei der in Fig. 2 dargestellten Vorrichtung ebenfalls eine Spülung ausführbar, hierzu lässt sich das Spülmittel 22 in dem Tank 1.4 wahlweise über die Wechselventile 5.1 bis 5.3 und die Primärpumpen 7.1 bis 7.3 fördern. So lässt sich vorteilhaft eine komplette Spülung der stoffführenden Teile ausführen. Am Ende wird das Spülmittel über das Spülventil 12 dem Ablauf 18 zugeführt. Es ist jedoch möglich, die Spülung mit dem jeweils neu gewählten Stoff auszuführen.

Das in Fig. 2 dargestellte Ausführungsbeispiel lässt sich alternativ auch derart ausgestalten, dass jeweils mehrere Primärpumpen mit gleicher Förderleistung parallel nebeneinander vorgesehen sind, um aus einer Mehrzahl von Tanks wahlweise Stoffe zu fördern. So besteht auch die Möglichkeit, das Ausführungsbeispiel nach Fig. 2 mit identischen Primärpumpen auszugestalten.

Die Ausbildung der in Fig. 1 und Fig. 2 dargestellten Wechselventile zur Freischaltung der Verbindungen zwischen den Tanks und der Primärpumpe ist beispielhaft. Grundsätzlich könnten die Anschlüsse an dem Wechselventil zur Anbindung der Tanks auch separat durch mehrere Teilventile geschaltet werden, die ohne eine Vorsteuerung direkt über die Steuereinrichtung einzeln schaltbar sind.

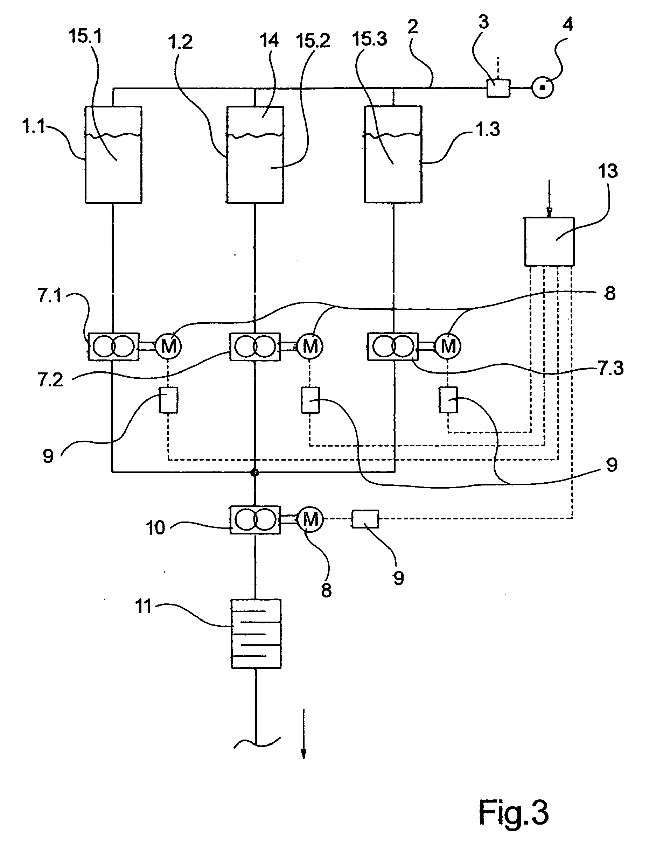

In Fig. 3 ist ein weiteres Ausführungsbeispiel der erfindungsgemäßen Vorrichtung schematisch dargestellt.

Bei dem in Fig. 3 dargestellten Ausführungsbeispiel sind mehrere Tanks 1.1 bis 1.3 vorgesehen, die jeweils einen flüssigen Stoff beispielsweise eine flüssige Farbe enthalten. Die Stoffe sind mit den Bezugszeichen 15.1, 15.2 und 15.3 gekennzeichnet. Jedem der Tanks 1.1 bis 1.3 ist jeweils eine Primärpumpe 7.1 bis 7.3 zugeordnet. Hierbei ist der Tank 1.1 direkt mit der Primärpumpe 7.1, der Tank 1.2 direkt mit der Primärpumpe 7.2 und der Tank 1.3 direkt mit der Primärpumpe 7.3 verbunden. Die Primärpumpen 7.1, 7.2 und 7.3 sind in ihrer Förderleistung identisch ausgebildet. Auf der Auslassseite sind die Primärpumpen 7.1 bis 7.3 gemeinsam mit der Sekundärpumpe 10 verbunden. Die Primärpumpen 7.1 bis 7.3 und die Sekundärpumpe 10 werden jeweils über einen Elektromotor 8 und ein Steuergerät 9 angetrieben. Die Steuergeräte 9 sind mit der Steuereinrichtung 13 gekoppelt.

Der Sekundärpumpe 10 ist der Einspeiseleitung 17 eine Mischeinrichtung 11 zugeordnet.

Bei dem in Fig. 3 dargestellten Ausführungsbeispiel der Erfindung erfolgt die Entnahme der Stoffe 15.1, 15.2 oder 15.3 aus den Tanks 1.1 bis 1.3 direkt durch die Primärpumpen 7.1 bis 7.3. Hierzu wird die jeweilige Primärpumpe über die Steuereinrichtung 13 aktiviert, so dass eine dosierte Menge des jeweiligen Stoffes der Sekundärpumpe 10 zugeführt wird. Ebenso lassen sich zur Bildung von Stoffgemischen zwei Primärpumpen gleichzeitig aktivieren, so dass die jeweilige dosierte Menge zweier Stoffe zu einem Stoffgemisch geführt werden. Der oder die Stoffe werden über die Sekundärpumpe 10 in der Mischeinrichtung 11 geführt und anschließend über die Einspeiseleitung 17 dem Abnehmersystem zugeführt.

Bei dem in Fig. 3 dargestellten Ausführungsbeispiel besteht auch die Möglichkeit, die Mischeinrichtung 11 auf der Einlaufseite der Sekundärpumpe 10 anzuordnen, so dass unmittelbar das bereits vermischte Stoffgemisch durch die Sekundärpumpe 10 in ein Abnehmersystem eingespeist wird.

Die in den Fig. 2 und 3 dargestellten Ausführungsbeispiele der Erfindung sind beispielhaft in der Anordnung und im Aufbau der einzelnen Bauteile. Grundsätzlich sind auch Variationen und Kombinationen der gezeigten Ausführungen möglich.

## Patentansprüche

1. Vorrichtung zum Dosieren und Einspeisen flüssiger Stoffe, insbesondere flüssiger Additive für Kunststoffschmelzen mit mehreren Tanks (1.1, 1.2) zur Aufnahme mehrerer flüssiger Stoffe, mit mehreren Primärpumpen (7.1, 7.2), die zur dosierten Entnahme der flüssigen Stoffe mit jeweils einem der Tanks (1.1, 1.2) verbunden sind, und mit einer Sekundärpumpe (10), die der Primärpumpe (7.1) nachgeordnet ist und zur Einspeisung des Stoffes mit einer Einspeiseleitung (17) verbunden ist,
**dadurch gekennzeichnet, dass**
die Primärpumpen (7.1, 7.2) über ein Verteilersystem (20.1, 20.2, 19, 21) gemeinsam mit der Sekundärpumpe (10) verbunden sind.

2. Vorrichtung nach Anspruch 1,
**dadurch gekennzeichnet, dass**
das Verteilersystem mehrere Dosierleitungen (20.1, 20.2) und zumindest einen Verteilerblock (19) aufweist, wobei die Primärpumpen (7.1, 7.2) durch die Dosierleitungen (20.1, 20.2) parallel mit dem Verteilerblock (19) verbunden sind und wobei der Verteilerblock (19) durch eine Sammelleitung (21) mit der Sekundärpumpe (10) gekoppelt ist.

3. Vorrichtung nach Anspruch 1 oder 2,
**dadurch gekennzeichnet, dass**
der Sekundärpumpe (10) auf der Auslassseite eine Mischeinrichtung (16) zugeordnet ist, die mit der Einspeiseleitung (17) verbunden ist.

4. Vorrichtung nach Anspruch 2 oder 3,
**dadurch gekennzeichnet, dass**
ein erster Drucksensor (11.1) in der Sammelleitung (21) angeordnet ist, der mit der Steuereinrichtung (13) verbunden ist, und dass die Sekundärpumpe (10) durch einen Elektromotor (8) angetrieben ist, der mittels einem Steuergerät (9) über die Steuereinrichtung (13) steuerbar ist.

5. Vorrichtung nach einem der Ansprüche 2 bis 4,
**dadurch gekennzeichnet, dass**
ein zweiter Drucksensor (11.2) in der Einspeiseleitung (17) zwischen Sekundärpumpe (10) und Mischeinrichtung (16) angeordnet ist, der mit der Steuereinrichtung (13) verbunden ist.

## Claims

1. Device for metering and feeding liquid substances, in particular liquid additives for plastic melts, having a plurality of tanks (1.1, 1.2) for accommodating a plurality of liquid substances, having a plurality of primary pumps (7.1, 7.2) which are connected to in each case one of the tanks (1.1, 1.2) in order to remove the liquid substances in a metered manner, and having a secondary pump (10) which is arranged downstream of the primary pump (7.1) and is connected to a feed line (17) in order to feed the substance, **characterized in that** the primary pumps (7.1, 7.2) are connected jointly to the secondary pump (10) via a distribution system (20.1, 20.2, 19, 21).

2. Device according to Claim 1, **characterized in that** the distribution system has a plurality of metering lines (20.1, 20.2) and at least one distribution block (19), the primary pumps (7.1, 7.2) being connected to the distribution block (19) in a parallel manner via the metering lines (20.1, 20.2) and the distribution block (19) being coupled to the secondary pump (10) via a collecting line (21).

3. Device according to Claim 1 or 2, **characterized in that** a mixing means (16) is assigned to outlet side of the secondary pump (10) and is connected to the feed line (17).

4. Device according to Claim 2 or 3, **characterized in that** a first pressure sensor (11.1) is arranged in the collecting line (21) and is connected to the control means (13), and **in that** the secondary pump (10) is driven by an electric motor (8) which can be controlled by means of a control unit (9) via the control means (13).

5. Device according to one of Claims 2 to 4, **characterized in that** a second pressure sensor (11.2) is arranged in the feed line (17) between the secondary pump (10) and the mixing means (16), and is connected to the control means (13).

## Revendications

1. Dispositif de dosage et d'alimentation de matières fluides, notamment d'additifs fluides pour matières plastiques fondues, avec plusieurs réservoirs (1.1, 1.2) permettant de recevoir plusieurs matières fluides, avec plusieurs pompes principales (7.1, 7.2) respectivement reliées à un des réservoirs (1.1, 1.2) pour extraire de façon dosée les matières fluides et avec une pompe secondaire (10) placée en aval de la pompe principale (7.1) et reliée à une conduite d'alimentation (17) servant à amener la matière, **caractérisé en ce que** les pompes principales (7.1, 7.2) sont reliées ensemble à la pompe secondaire (10) par le biais d'un système de répartiteur (20.1, 20.2, 19, 21).

2. Dispositif selon la revendication 1, **caractérisé en ce que** le système de répartiteur comprend plusieurs conduites de dosage (20.1, 20.2) et au moins un bloc de répartiteur (19), les pompes principales (7.1, 7.2) étant reliées par les conduites de dosage (20.1, 20.2) parallèlement au bloc de répartiteur (19) et le bloc de répartiteur (19) étant couplé à la pompe secondaire (10) par le biais d'une conduite collectrice (21).

3. Dispositif selon la revendication 1 ou 2, **caractérisé en ce qu'**un dispositif de mélange (16) relié à la conduite d'alimentation (17) est associé à la pompe secondaire (10) du côté de sortie.

4. Dispositif selon la revendication 2 ou 3, **caractérisé en ce qu'**un premier capteur de pression (11.1) est disposé dans la conduite collectrice (21), ledit capteur étant relié au dispositif de commande (13) et que la pompe secondaire (10) est entraînée par un moteur électrique (8) pouvant être commandé à l'aide d'un appareil de commande (9) par le biais du dispositif de commande (13).

5. Dispositif selon l'une quelconque des revendications 2 à 4, **caractérisé en ce qu'**un deuxième capteur de pression (11.2) est disposé dans la conduite d'alimentation (17) entre la pompe secondaire (10) et le dispositif de mélange (16), ledit capteur étant relié au dispositif de commande (13).
